# FASCICULE DE BREVET EUROPEEN

(11) **EP 0 350 366 B1**
(45) Date de publication et mention de la délivrance du brevet: **08.09.1993**
(21) Numéro de dépôt: 89401808.4
(22) Date de dépôt: 26.06.1989
(51) Int. Cl.: H01G 9/00

(54) **Condensateur à électrolyte solide, notamment au tantale, à fusible incorporé**
Festelektrolytkondensator, insbesondere aus Tantal, mit einer eingebauten Schmelzsicherung
Solid electrolytic capacitor, especially one made of tantalum, with an incorporated fuse

(30) Priorité: 04.07.1988 FR 8809015
(43) Date de publication de la demande: 10.01.1990
(73) Titulaire: SPRAGUE FRANCE, F-37100 Tours Cédex (FR)
(72) Inventeur: Gouvernelle, Didier Michel, F-37360 Semblancay (FR)
(74) Mandataire: Santarelli, Marc

(56) Documents cités:
- EP-A- 0 232 868
- EP-A- 0 233 751
- DE-C- 744 480
- IBM TECHNICAL DISCLOSURE BULLETIN, vol. 27, no. 4A, septembre 1984, pages 2026-2027, New York, US; R.E. HORSTMANN et al.: "Current-limited chip capacitor"

## Description

L'invention concerne l'aménagement d'un fusible dans un condensateur à électrolyte solide tel qu'un condensateur au tantale.

Dans le but notamment de réduire les conséquences fâcheuses d'un court-circuit dans un circuit comportant un ou plusieurs condensateur(s) à électrolyte solide, on a cherché à intégrer un fusible au sein même de ce(s) condensateur(s) tout en limitant le supplément d'encombrement qui en résulte.

Il est rappelé tout d'abord qu'un condensateur à électrolyte solide, notamment du type au tantale, comporte principalement une anode poreuse d'où vient en saillie un fil d'anode, et qui est recouverte complètement ou partiellement de diverses couches (en pratique des couches de diélectrique/oxyde, de dioxyde de manganèse remplissant sensiblement les pores de l'anode et constituant l'électrolyte solide, et une couche conductrice formant contrélectrode (cathode)). Ceci constitue un corps de condensateur que l'on enrobe dans une matière électriquement isolante après avoir fixé aux électrodes des languettes de connexion terminées par des bornes de sortie. On obtient ainsi des condensateurs très compacts de forme géométrique simple (cylindre ou plus généralement parallèlépipède rectangle).

On connaît déjà divers types de tels condensateurs à fusible incorporé.

Ainsi le document US-4.107.762 décrit un condensateur dans lequel la languette formant la borne négative est connectée à la contr'électrode par un fusible noyé dans l'enrobage isolant, ce fusible étant formé par un double ruban d'aluminium et de palladium. En cas de court-circuit, l'échauffement de ce fusible produit de façon exothermique un alliage de ces éléments et une coupure électrique entre cette borne négative et la contr'électrode.

Cette solution, qui donne satisfaction dans de nombreux cas, présente toutefois l'inconvénient d'une assez grande dispersion dans les longueurs efficaces ou utiles de ces fusibles, et donc des seuils de courant associés.

Pour pallier cet inconvénient on a proposé par la suite, par le document US-4.224.656, d'utiliser un bloc à fusible comportant un bloc isolant à faces parallèles au travers duquel est ménagé un perçage ainsi qu'un fil fusible disposé parallèlement à l'axe de ce perçage, dont la longueur efficace est donc déterminée de façon très précise.

La précision de ce bloc à fusible est améliorée par le fait que cette longueur efficace de fil fusible se trouve disposée dans une poche d'air thermiquement isolante qui évite que la chaleur générée dans ce fil par effet JOULE ne puisse diffuser dans le condensateur et retarder la coupure du circuit. La fabrication de tels blocs est toutefois assez longue et délicate.

En vue d'une plus grande facilité de fabrication, pour un niveau de performances comparable le document EP-0 232 868 a proposé un élément à fusible comportant une plaque isolante sur laquelle deux couches conductrices disjointes de géométrie très précise sont reliées par un fil fusible disposé en un emplacement déterminé grâce à quoi sa longueur efficace est déterminée avec précision. Ce fil fusible est enrobé dans une substance élastique thermiquement isolante telle qu'une résine silicone dans laquelle sont formées des bulles améliorant l'isolation thermique.

On peut noter que les documents US-4.224.656 et EP-0 232 868 parviennent à un calibrage de la longueur efficace du fil fusible grâce à la mise en oeuvre d'un élément de support additionnel apparemment nécessaire, au cours de la fabrication, pour maintenir à un écartement prédéterminé ses zones auxquelles doivent être fixées les extrémités du fil fusible.

L'invention a pourtant pour objet de simplifier encore plus l'intégration d'un fusible dans un condensateur à électrolyte solide, et donc d'en réduire le coût, tout en conduisant à un niveau comparable de performances, grâce à la suppression de tout élément intermédiaire de support rapporté entre la languette de connexion négative et la contr'électrode.

Elle propose à cet effet de disposer une longueur efficace prédéterminée de fil fusible calibré entre deux tronçons électriquement isolés de cette languette, laquelle est directement connectée par un de ses tronçons à la contr'électrode.

Très généralement l'invention propose ainsi un condensateur à électrolyte solide comportant, noyé dans un bloc de résine électriquement isolante, un corps de condensateur muni de deux électrodes électriquement connectées, respectivement, à deux languettes de connexion débouchant hors du bloc pour constituer des bornes de sortie (+, -), un élément fusible de longueur utile prédéterminée étant monté en série entre le corps de condensateur et l'une choisie des bornes de sortie, la languette de connexion comportant cette borne de sortie choisie étant formée d'un premier tronçon fixé à l'une des électrodes du corps de condensateur et d'un second tronçon, électriquement isolé vis-à-vis du premier tronçon et du corps de condensateur, et débouchant hors du bloc pour former ladite borne de sortie choisie, caractérisé en ce que l'élément fusible établit à lui seul une liaison électrique entre les tronçons en étant enrobé d'une masse-support de résine rigide thermiquement isolante s'étendant de l'un à l'autre des deux tronçons en sorte de les solidariser mécaniquement, cette masse-support étant elle-même noyée dans la résine constitutive du bloc.

Selon des dispositions préférées :
- les premier et second tronçons de languette comportent deux pattes parallèles coplanaires reliées par l'élément fusible ;
- chacun des tronçons étant bordé par des flancs latéraux coplanaires avec ceux de l'autre tronçon, les pattes parallèles bordent chacune l'un des flancs latéraux en étant latéralement décalées l'une de l'autre ;
- les pattes coplanaires s'étendent perpendiculairement à des portions de chacun desdits tronçons avec lesquelles ces pattes définissent une cavité remplie au moins partiellement par la masse-support ;
- l'élément fusible est un fil de section calibrée s'étendant transversalement d'une patte à l'autre;
- la masse-support est faite en une résine non carbonisable à la température de fusion de l'élément fusible ;
- la masse-support est faite en une résine polymérisée sous rayonnement ultra violet ;
- le corps de condensateur comporte un coeur poreux en tantale.

Pour la fabrication d'un tel condensateur à fusible incorporé l'invention propose un procédé de fabrication d'un condensateur à électrolyte solide à élément fusible incorporé, selon lequel :
- on élabore un corps de condensateur muni d'électrodes ;
- on délimite par découpe dans une plaque, au moins une bande discontinue reliée à un cadre de référence et comportant deux tronçons extrêmes solidaires dudit cadre et un tronçon médian relié au cadre de référence par une bande continue de liaison ;
- on plie les tronçons de la bande discontinue selon des lignes transversales de pliage en sorte de leur donner une forme définitive ;
- on fixe avant ou après pliage un élément fusible entre le tronçon médian et l'un des tronçons extrêmes et on enrobe cet élément fusible dans une masse-support en résine rigide thermiquement isolante s'étendant de l'un à l'autre de ces tronçons en sorte de les solidariser mécaniquement et constituer une languette de connexion;
- on dissocie le tronçon médian vis-à-vis de la bande continue de liaison et on fixe ce tronçon médian ainsi que l'autre tronçon extrême formant une languette de connexion, respectivement, aux électrodes du corps de condensateur ;
- on enrobe par moulage ce corps de condensateur et ces languettes de connexion dans un bloc de résine électriquement isolante ; et
- on dissocie les languettes vis-à-vis du cadre de référence.

De manière préférée dans chaque cadre de référence on délimite par découpe deux bandes discontinues identiques comprenant chacune un tronçon médian relié au cadre de référence par une même bande continue de liaison.

Des objets, caractéristiques et avantages de l'invention ressortent de la description qui suit, donnée à titre d'exemple non limitatif, en regard des dessins annexés sur lesquels :
- la figure 1 est une vue schématique en coupe d'un condensateur au tantale comportant un fusible incorporé conforme à l'invention ;
- la figure 2 est une vue partielle de dessus d'une plaque dans laquelle sont découpées les languettes de connexion du condensateur de la figure 1 ; et
- la figure 3 est une vue partielle en perspective de la plaque de la figure 2, après des opérations de pliage, de fixation du fil fusible et de poinconnage.

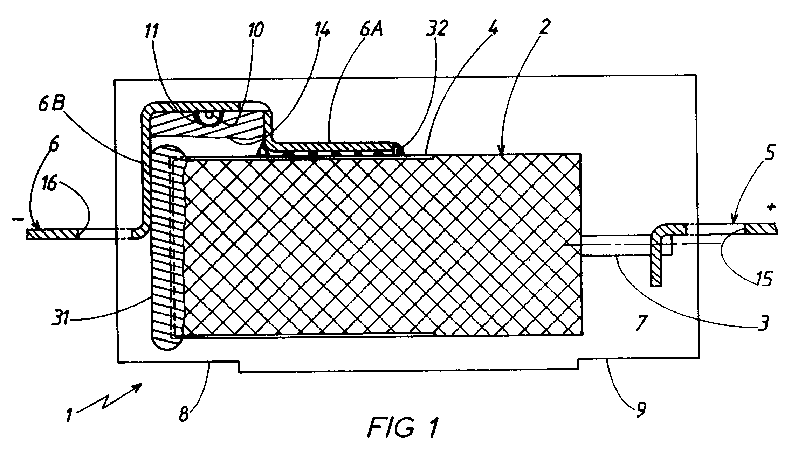

La figure 1 représente un condensateur au tantale 1 comportant un corps de condensateur 2 vis-à-vis duquel une tige d'anode 3 en tantale vient en saillie.

Ce corps de condensateur 2 est de tout type connu approprié avec un coeur poreux au tantale oxydé superficiellement, enrobé dans un électrolyte solide formé de dioxyde de manganèse et recouvert partiellement de diverses couches appropriées dont une couche extérieure de contr'électrode 4 isolée électriquement vis-à-vis de la tige d'anode 3.

Une languette conductrice de connexion, positive 5 est fixée à la tige d'anode 3 (à la faveur d'une entaille 5A avantageusement prévue) tandis qu'une languette conductrice de connexion négative 6 est fixée à la couche de contr'électrode 4.

Le tout est enrobé dans un bloc parallélépipèdique rectangle de matière isolante 7, en pratique une résine époxy de tout type approprié, de telle sorte que les languettes conductrices 5 et 6 viennent en saillie pour former des bornes de sortie + et -. Des creux 8 et 9 sont ménagés près d'arêtes opposées du bloc 2 pour permettre que les extrémités libres des languettes 5 et 6 puissent se replier pour l'essentiel dans l'encombrement du bloc 7.

La languette conductrice 6 est formée de deux tronçons 6A et 6B électriquement isolés, à ceci près qu'un fil fusible calibré 10 est fixé en ses extrémités par exemple par brasure à chacun de ces tronçons, avec formations de zones de brasure 11.

Ce fil fusible 10 est de tout type approprié ; il s'agit par exemple d'un fil vendu sous la marque "PYROFUSE" par la Société PYROFUSE CORPORATION. Il peut s'agir d'un fil d'aluminium recouvert d'une pellicule de palladium ou de cuivre, ou encore d'un fil plomb-étain-argent, ou plomb-argent dans des proportions appropriées connues.

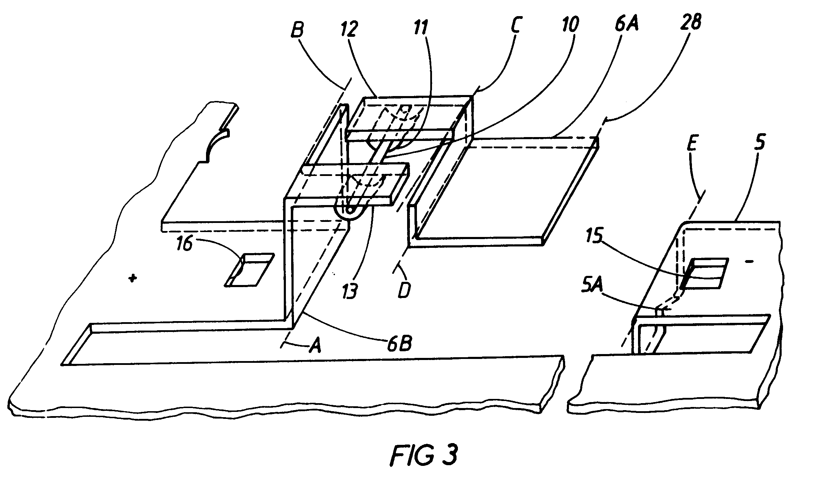

Les tronçons 6A et 6B comportent des pattes parallèles 12 et 13, respectivement, entre lesquelles est ménagé un espace de largeur constant prédéterminé (voir figure 3) qui détermine la longueur efficace du fil fusible 10.

Ce fil 10 est noyé dans une résine de protection 14 qui adhère par ailleurs aux pattes 12 et 13, en remplissant ici une cavité ménagées entre des portions parallèles des tronçons 6A et 6B.

Cette résine de protection 14 joue deux rôles :
. protection thermique de la résine isolante constitutive du bloc 7 en cas de fusion du fil fusible sous l'effet d'une intensité exagérée ; cela permet une définition précise des caractéristiques de fusion (environ 400°C voire jusqu'à 660°C selon la nature des matériaux constitutifs du fil fusible). De manière préférée cette résine de protection 14 est choisie de manière à ne pas subir de carbonisation à la température de fusion du fil fusible, de manière à ne pas introduire de résistance résiduelle ;
. collage mécanique des pattes 6 et 7 (voir plus loin) grâce à sa rigidité ; cette résine 14 constitue donc une masse de support et de liaison des tronçons 6A et 6B.

Cette résine de protection, rigide et thermiquement isolante, non carbonisable à la température de fusion du fusible 10, est par exemple une résine de type CHIPBONDER 360 ou LID 1043.

Cette résine peut aussi être similaire à la résine constitutive du bloc 7, étant précisé que, étant formée avant ledit bloc (voir plus loin), elle présente dans le condensateur 1 fini un interface qui permet d'en déceler l'existence.

Des orifices 15 et 16 sont avantageusement ménagés dans les languettes 6 et 7 pour améliorer l'ancrage de celles-ci dans le bloc 7.

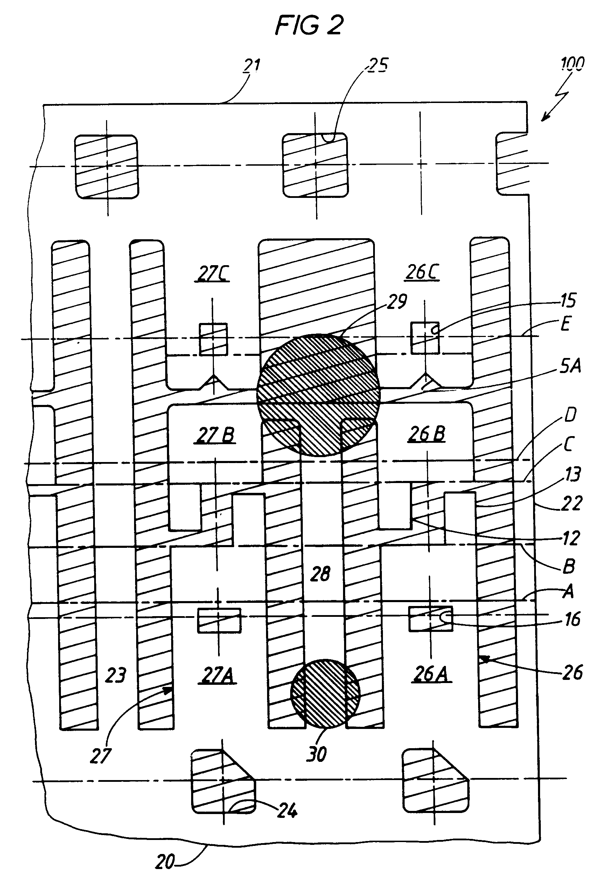

Les figures 2 et 3 illustrent deux étapes successives dans la fabrication du condensateur 1, choisies de manière à montrer le détail de la formation des languettes 6 et 7 et de la fixation du fil fusible 10.

La figure 2 montre une portion d'une plaque 100 en matériau électriquement conducteur (par exemple d'alliage Fer-Nickel de type FN 42) dans laquelle diverses découpes ont été pratiquées (zones hachurées à hachures espacées), par exemple par estampage.

Cette plaque conductrice ajourée (en anglais "lead frame") comporte ici deux bandes verticales 20 et 21 solidaires de deux bandes horizontales 22 et 23 comportant des perçages 24 et 25 de positionnement. Cette disposition est reproduite à l'identique de façon périodique le long des bandes horizontales.

Dans le cadre de référence constitué des bandes 20 à 23 sont ménagées deux bandes verticales discontinues 26 et 27 composées chacune de tronçons à flancs coplanaires et destinés à devenir les languettes de connexion 5 et 6 du condensateur 1 de la figure 1.

Ainsi la bande 26 comporte, à partir de la bande horizontale 20, un tronçon 26A destiné à constituer le tronçon 6B de la languette 6, dans lequel est ménagé le perçage 16 et terminé le long de l'un de ses flancs par la patte 13 qui a ici une largeur voisine du tiers de celle de la bande 26.

Cette bande 26 comporte ensuite un tronçon 26B raccordé par une bande 28 en T à la bande horizontale 20 et destiné à devenir le tronçon 6A de la languette 6. Le tronçon 26B est prolongé sur un de ses flancs, à l'écart de la patte 13 par une patte correspondant à la patte 12 du tronçon 6A (ici de même largeur que la patte 13).

Cette bande 26 comporte enfin un tronçon 26C raccordé à la bande horizontale 21, destiné à constituer la patte 5 du condensateur 1 et dans lequel sont ménagés le perçage 15 et l'entaille 5A du tronçon 5.

La bande 27 comporte des tronçons 27A, 27B, et 27C similaires, le tronçon 27B étant raccordé à la bande horizontale 20 par ladite bande 28 en T.

Le dimensionnement de la bande 28 en T est choisi de manière à assurer à soi seul une liaison mécanique rigide entre les tronçons médians 26B et 27B à la bande horizontale 20.

On procède alors au pliage de la plaque ajourée 100 selon les lignes de pliage A, B, C, D et E en sorte de donner aux tronçons des bandes 26 et 27 la configuration voulue pour les languettes 6 et 7 (avec formation d'une sorte de cavité destinée à recevoir la masse-support 14). Les lignes de pliage sont figurées sur la figure 3. Le pliage de ces bandes 26 et 27 est également appliqué à la bande 28 en T mais, dans l'exemple considéré, n'est pas appliqué aux bandes 22 et 23 qui définissent ainsi, avec les bandes horizontales 20 et 21 un plan de référence.

On effectue alors la fixation par brasure du fil fusible calibré 10 qui s'étend ici sur toute la largeur de la bande 26 (ou 27). Comme les tronçons 26A et 26B sont maintenus en position relative par la bande 28, l'écartement transversal entre les pattes 12 et 13 reste constant, égal à leur écartement dans la configuration plane de la figure 2, tandis que leurs flancs sont coplanaires comme à la figure 2.

On applique alors (dans la cavité précitée) la résine de protection 14 qui du fait de sa rigidité après polymérisation peut assurer à elle seule la solidarisation mécanique des tronçons 26A et 26B (27A et 27B). On peut alors dissocier les tronçons 26B et 27B de la bande horizontale 20, ce qui est obtenu ici par poinconnage de zones 29 et 30 (hachures rapprochées) recouvrant les parties haute et basse de la branche 28 dont une partie médiane se sépare ainsi du reste de la plaque ajourée 100.

Pour des raisons de facilité d'emploi la résine de protection 14 est avantageusement d'un type propre à polymériser sous rayonnement ultra-violet. Il s'agit avantageusement d'une résine de type CHIPBONDER 360 ou LID 1043.

On prépare par ailleurs un corps de condensateur 4 dont on revêt avantageusement la tranche (généralement argentée) opposée à la tige d'anode 3 d'une couche 31 de résine isolante de tout type connu approprié de manière à éviter tout court-circuit entre cette tranche et la partie verticale du tronçon 6B de la languette 6. En variante cette résine isolante est directement appliquée à ladite partie verticale du tronçon 6B.

On positionne alors le corps de condensateur 4 auprès des tronçons 6A, 6B et 5 ; on colle au corps 4 la partie horizontale du tronçon 6A, en pratique avec de la colle à l'argent 32, tandis que l'on soude la languette 5 au fil de tantale 3.

On dispose enfin l'ensemble, corps de condensateur + languettes 6A, 6B, 5 entre les parties d'un moule en utilisant les bandes 20 à 23 à des fins de positionnement. On injecte la résine 7 et après polymérisation de celle-ci (en pratique sous température) on dégage le condensateur du moule.

Cette opération de moulage est effectuée pour chaque paire de bandes 26/27 délimitée par découpe dans la plaque 100.

Il n'y a plus alors qu'à couper les zones de jonctions des languettes 6 et 5 aux bandes 20 et 21. Le condensateur 1 à fusible 10 incorporé est alors prêt à l'emploi.

Il va de soi que la description qui précède n'a été proposée qu'à titre illustratif non limitatif et que de nombreuses variantes peuvent être proposées sans sortir du cadre de l'invention. Ainsi par exemple l'élément fusible peut être prévu dans la languette positive ; il peut être disposé en bout du corps de condensateur et non pas sur un côté.

## Revendications

1. Condensateur à électrolyte solide (1) comportant, noyé dans un bloc (7) de résine électriquement isolante, un corps de condensateur (2) muni de deux électrodes (3,4) électriquement connectées respectivement, à deux languettes de connexion (5,6) débouchant hors du bloc (9) pour constituer des bornes de sortie (+, -), un élément fusible (10) de longueur utile prédéterminée étant monté en série entre le corps de condensateur (2) et l'une choisie (-) des bornes de sortie, la languette de connexion (6) comportant cette borne de sortie choisie étant formée d'un premier tronçon (6A) fixé à l'une des électrodes (4) du corps de condensateur (2) et d'un second tronçon (6B), électriquement isolé vis-à-vis du premier tronçon (6A) et du corps de condensateur (2), et débouchant hors du bloc (9) pour former ladite borne de sortie choisie (-), caractérisé en ce que l'élément fusible (10) établit à lui seul une liaison électrique entre les tronçons (6A, 6B) en étant enrobé d'une masse-support de résine rigide thermiquement isolante (14) s'étendant de l'un à l'autre des deux tronçons en sorte de les solidariser mécaniquement, cette masse-support (14) étant elle-même noyée dans la résine constitutive du bloc (9).

2. Condensateur selon la revendication 1, caractérisé en ce que les premier (6A) et second (6B) tronçons de languette comportent deux pattes parallèles (12, 13) coplanaires reliées par l'élément fusible (10).

3. Condensateur selon la revendication 2, caractérisé en ce que, chacun des tronçons étant bordé par des flancs latéraux coplanaires avec ceux de l'autre tronçon, les pattes parallèles (12,13) bordent chacune l'un des flancs latéraux en étant latéralement décalées l'une de l'autre.

4. Condensateur selon la revendication 2 ou la revendication 3, caractérisé en ce que les pattes coplanaires (12, 13) s'étendent perpendiculairement à des portions de chacun desdits tronçons avec lesquelles ces pattes définissent une cavité remplie au moins partiellement par la masse-support (14).

5. Condensateur selon l'une quelconque des revendications 2 à 4, caractérisé en ce que l'élément fusible (10) est un fil de section calibrée s'étendant transversalement d'une patte à l'autre (12, 13).

6. Condensateur selon l'une quelconque des revendications 1 à 5, caractérisé en ce que la masse-support (14) est faite en une résine non carbonisable à la température de fusion de l'élément fusible.

7. Condensateur selon l'une quelconque des revendications 1 à 6, caractérisé en ce que la masse-support (14) est faite en une résine polymérisée sous rayonnement ultra-violet.

8. Condensateur selon l'une quelconque des revendications 1 à 7, caractérisé en ce que le corps de condensateur comporte un coeur poreux en tantale.

9. Procédé de fabrication d'un condensateur à électrolyte solide à élément fusible incorporé, conforme à l'une quelconque des revendications 1 à 8, selon lequel :
- on élabore un corps de condensateur (2) muni d'électrodes ;
- on délimite par découpe dans une plaque (100), au moins une bande discontinue (26, 27) reliée à un cadre de référence (20-23) et comportant deux tronçons extrêmes (26A, 26C ; 27A, 27C) solidaires dudit cadre et un tronçon médian (26B ; 27B) relié au cadre de référence par une bande continue de liaison (28) ;
- on plie les tronçons de la bande discontinue selon des lignes transversales de pliage (A, B, C, D, E) en sorte de leur donner une forme définitive ;
- on fixe avant ou après pliage un élément fusible (10) entre le tronçon médian (26B) et l'un (26A) des tronçons extrêmes et on enrobe cet élément fusible dans une masse-support (14) en résine rigide thermiquement isolante s'étendant de l'un à l'autre de ces tronçons en sorte de les solidariser mécaniquement et constituer une languette de connexion (6) ;
- on dissocie (29) le tronçon médian (26B) vis-à-vis de la bande continue de liaison et on fixe ce tronçon médian (26B), ainsi que l'autre tronçon extrême (26C) formant une languette de connexion (5), respectivement, aux électrodes du corps de condensateur (2) ;
- on enrobe par moulage ce corps de condensateur et ces languettes de connexion dans un bloc (9) de résine électriquement isolante ; et
- on dissocie les languettes (5, 6) vis-à-vis du cadre de référence (20 - 23).

10. Procédé selon la revendication 9, caractérisé en ce que dans chaque cadre de référence (20, 23) on délimite par découpe deux bandes discontinues identique (26, 27) comprenant chacune un tronçon médian (26B ; 27B) relié au cadre de référence par une même bande continue de liaison (28).

11. Procédé selon la revendication 9 ou la revendication 10, caractérisé en ce que l'on forme la masse-support (14) en soumettant à rayonnement ultra violet une résine polymérisable sous rayonnement ultraviolet.

## Claims

1. Solid-electrolyte capacitor (1) comprising, embedded in a block (7) of electrically insulating resin, a capacitor body (2) having two electrodes (3, 4) electrically connected respectively to two connecting blades (5, 6) projecting from the block (9) to constitute output terminals (+, -), a fusible element (10) of predetermined length connected in series between the capacitor body (2) and a selected one (-) of the output terminals, the connecting blade (6) incorporating this selected output terminal being formed by a first section (6A) fixed to one of the electrodes (4) of the capacitor body (2) and a second section (6B) electrically insulated from the first section (6A) and from the capacitor body (2) and projecting from the block (9) to form the said selected output terminal (-), characterised in that the fusible element (10) alone establishes an electrical connection between the sections (6A, 6B), being embedded in a support mass of rigid, thermally insulating resin (14) extending from one of the two sections to the other so as to join them together mechanically, this support mass (14) itself being embedded in the resin making up the block (9).

2. Capacitor according to Claim, 1, characterised in that the first (6A) and second (6B) blade sections have two parallel coplanar lugs (12, 13) connected by the fusible element (10).

3. Capacitor according to Claim 2, characterised in that, each of the sections having lateral faces coplanar with those of the other section, the parallel lugs (12, 13) each border one of the lateral faces and are laterally offset with respect to each other.

4. Capacitor according to Claim 2 or Claim 3, characterised in that the coplanar lugs (12, 13) are perpendicular to portions of each of the said sections, with which these lugs define a cavity at least partially filled by the support mass (14).

5. Capacitor according to any one of Claims 2 to 4, characterised in that the fusible element (10) is a wire with a calibrated cross section extending transversely from one lug to the other (12, 13).

6. Capacitor according to any one of Claims 1 to 5, characterised in that the support mass (14) is made from a resin which will not carbonise at the temperature at which the fusible element melts.

7. Capacitor according to any one of Claims 1 to 6, characterised in that the support mass (14) is made from a resin polymerised under ultraviolet light.

8. Capacitor according to any one of Claims 1 to 7, characterised in that the capacitor body has a porous tantalum core.

9. Method of manufacturing a solid-electrolyte capacitor with an incorporated fusible element, in accordance with any one of Claims 1 to 8, according to which:
- a capacitor body (2) equipped with electrodes is made;
- a plate (100) is cut so as to define at least one discontinuous strip (26, 27) connected to a reference frame (20-23) and having two end sections (26A, 26C; 27A, 27C) attached to the said frame and a middle section (26B; 27B) connected to the reference frame by a continuous joining strip (28);
- the sections of the discontinuous strip are bent along transverse bending lines (A, B, C, D, E) so as to give them their final shape;
- before or after bending, a fusible element (10) is fixed between the middle section (26B) and one (26A) of the end sections and this fusible element is embedded in a support mass (14) of rigid, thermally insulating resin extending from one of these sections to the other so as to join them together mechanically and form a connecting blade (6);
- the middle section (26B) is separated (29) from the continuous joining strip, and this middle section (26B) and the other end section (26C) forming a connecting blade (5) are fixed respectively to the electrodes of the capacitor body (2);
- this capacitor body and these connecting blades are embedded, by moulding, in a block (9) of electrically insulating resin; and
- the blades (5, 6) are separated from the reference frame (20-23).

10. Method according to Claim 9, characterised in that two identical continuous strips (26, 27) are defined by cutting in each reference frame (20, 23), each comprising a middle section (26B; 27B) connected to the reference frame by a common continuous joining strip (28).

11. Method according to Claim 9 or Claim 10, characterised in that the support mass (14) is formed by subjecting to ultraviolet radiation a resin which can be polymerised under ultraviolet radiation.

## Patentansprüche

1. Festelektrolytkondensator (1) mit einem in einen Block (7) aus elektrisch isolierendem Hart eingebetteten Kondensatorkörper (2), der mit zwei Elektroden (3,4) versehen ist, die jeweils mit einer von zwei Anschlußzungen (5,6) elektrisch verbunden sind, die aus dem Block (9) herausragen, um Ausgangsklemmen (+,-) auszubilden, ferner mit einem Schmelzsicherungselement (10) vorbestimmter Nutzlänge, das in Reihe zwischen den Kondensatorkörper (2) und eine ausgewählte (-) der Ausgangsklemmen geschaltet ist, wobei die diese ausgewählte Ausgangsklemme umfassende Anschlußzunge (6) aus einem ersten Abschnitt (6A), der an einer der Elektroden (4) des Kondensatorkörpers (2) befestigt ist, und aus einem zweiten Abschnitt (6B) gebildet ist, der gegenüber dem ersten Abschnitt (6A) und dem Kondensatorkörper (2) elektrisch isoliert ist, und aus dem Block (9) herausragt, um die besagte ausgewählte (-) Ausgangsklemme zu bilden, **dadurch gekennzeichnet**, daß allein das Schmelzsicherungselement (10) eine elektrische Verbindung zwischen den Abschnitten (6A, 6B) herstellt und dabei von einer Stützmasse aus einem starren, wärmeisolierenden Hart (14) umgeben ist, die von einem der beiden Abschnitte zum anderen so verläuft, daß sie diese miteinander mechanisch verbindet, und die selbst in das den Block (9) bildende Harz eingebettet ist.

2. Kondensator nach Anspruch 1, dadurch gekennzeichnet, daß der erste (6A) und der zweite (6B) Abschnitt der Zunge zwei parallele, komplanare, durch das Schmelzsicherungselement (10) miteinander verbundende Laschen (12, 13) aufweisen.

3. Kondensator nach Anspruch 2, dadurch gekennzeichnet, daß jeder Abschnitt durch Seitenflanken, die komplanar zu denen des anderen Abschnitts verlaufen, begrenzt wird und jede der parallelen Laschen (12,13) eine der Seitenflanken begrenzt, wobei die Laschen seitlich zueinander versetzt sind.

4. Kondensator nach Anspruch 2 oder Anspruch 3, dadurch gekennzeichnet, daß die komplanaren Laschen (12,13) senkrecht zu Teilen jedes Abschnitts verlaufen, mit denen sie eine Vertiefung festlegen, die mindestens teilweise durch die Stützmasse (14) ausgefüllt ist.

5. Kondensator nach einem der Ansprüche 2 bis 4, dadurch gekennzeichnet, daß das Schmelzsicherungselement (10) aus einem sich quer von einer Lasche zur anderen (12,13) erstreckenden Draht mit kalibriertem Querschnitt besteht.

6. Kondensator nach einem der Ansprüche 1 bis 5, dadurch gekennzeichnet, daß die Stützmasse (14) aus einem Harz hergestellt ist, das bei der Schmelztemperatur des Schmelzsicherungselementes nicht karbonisierbar ist.

7. Kondensator nach einem der Ansprüche 1 bis 6, dadurch gekennzeichnet, daß die Stützmasse (14) aus einem unter Ultraviolettbestrahlung polymerisierten Hart hergestellt ist.

8. Kondensator nach einem der Ansprüche 1 bis 7, dadurch gekennzeichnet, daß der Kondensatorkörper einen porösen Kern aus Tantal aufweist.

9. Verfahren zur Herstellung eines Festelektrolytkondensators mit eingebautem Schmelzsicherungselement nach einem der Ansprüche 1 bis 8, bei dem:
- man einen mit Elektroden versehenen Kondensatorkörper (2) herstellt;
- man durch einen Schnittvorgang in eine Platte (100) wenigstens einen nicht durchlaufenden Streifen (26, 27) festlegt, der an einem Bezugsrahmen (20-23) befestigt ist und zwei Außenabschnitte (26A, 26C; 27A, 27C), die fest mit besagtem Rahmen verbunden sind, sowie einen Mittelabschnitt (26B; 27B) aufweist, der am Bezugsrahmen über einen durchlaufenden Verbindungsstreifen (28) befestigt ist;
- man die Abschnitte des nicht durchlaufenden Streifens längs querverlaufender Faltlinien (A, B, C, D, E) so faltet, daß man ihnen eine endgültige Form gibt;
- man vor oder nach dem Falten ein Schmelzsicherungselement (10) zwischen dem Mittelabschnitt (26B) und einem (26A) der Außenabschnitte befestigt und dieses Schmelzsicherungselement mit einer Stützmasse (14) aus starrem, wärmeisolierendem Hart umgibt, die sich von einem dieser Abschnitte zum anderen derart erstreckt, daß sie diese mechanisch miteinander verbindet und eine Anschlußzunge (6) ausgebildet wird;
- man den Mittelabschnitt (26B) vom durchlaufenden Verbindungsstreifen trennt (29) und diesen Mittelabschnitt (26B) wie auch den anderen, eine Anschlußzunge (5) bildenden Außenabschnitt (26C) jeweils an den Elektroden des Kondensatorkörpers (2) befestigt;
- man diesen Kondensatorkörper und diese Anschlußzungen durch Gießen in einen Block (9) aus elektrisch isolierendem Harz bettet, und
- man die Zungen (5, 6) vom Bezugsrahmen (20-23) trennt.

10. Verfahren nach Anspruch 9, dadurch gekennzeichnet, daß man in jedem Bezugsrahmen (20, 23) durch einen Schnittvorgang zwei identische, nicht durchlaufende Streifen (26, 27) festlegt, deren jeder einen Mittelabschnitt (26B; 27B) aufweist, wobei diese Mittelabschnitte mit dem Bezugsrahmen über denselben durchlaufenden Verbindungsstreifen (28) verbunden sind.

11. Verfahren nach Anspruch 9 oder Anspruch 10, dadurch gekennzeichnet, daß man die Stützmasse (14) ausbildet, indem man ein durch Ultraviolettbestrahlung polymerisierbares Harz einer Ultraviolettbestrahlung aussetzt.
